# EUROPEAN PATENT APPLICATION

(11) **EP 4 280 195 A1**
(43) Date of publication of application: **22.11.2023**
(21) Application number: 22739423.6
(22) Date of filing: 12.01.2022
(51) Int. Cl.: G08G 1/16, H04N 7/18, B60R 1/20

(54) **DRIVING SUPPORT SYSTEM, VEHICLE, AND IMAGING DEVICE**

(30) Priority: 18.01.2021 JP 2021005862
(71) Applicant: Kyocera Corporation, Kyoto-shi Kyoto 612-8501 (JP)
(72) Inventor: FUKE Hayato, Kyoto-shi, Kyoto 612-8501 (JP)
(74) Representative: Viering, Jentschura & Partner mbB Patent- und Rechtsanwälte
(86) International application number: PCT/JP2022/000771
(87) International publication number: WO 2022/154018

(57) **Abstract**

A driving support system 10 includes a vehicle 110, a controller 120, a flying object 130, and a display device 140. The vehicle 110 acquires information on the environment around the vehicle 110. The controller 120 uses a three-dimensional map database 123 to estimate a blind spot occurring in the environment around the vehicle 110 and performs image processing on an image captured by the flying object 130 to create an image to be provided to an operator/driver. The flying object 130 captures the area where the blind spot estimated by the controller 120 occurs. The display device 140 provides the image created by the controller 120 to the operator/driver.

## Description

### CROSS-REFERENCE TO RELATED APPLICATIONS

This application claims priority based on Japanese Patent Application No. 2021-005862 filed January 18, 2021, the entire disclosure of which is hereby incorporated by reference.

### TECHNICAL FIELD

The present disclosure relates to a driving support system, a vehicle, and an imaging device.

### BACKGROUND OF INVENTION

In the related art, a device is known that uses an imaging device and sensors mounted on a vehicle to detect obstacles around the vehicle.

For example, Patent Literature 1 discloses a feature of a vicinity monitoring device that displays the location of an obstacle detected by multiple radar devices on an overhead map illustrating the environment around a vehicle, the overhead map being a composite of images taken by multiple imaging devices.

### CITATION LIST

### PATENT LITERATURE

Patent Literature 1: WO 2012/169361

### SUMMARY

A driving support system according to an embodiment of the present disclosure includes a first imaging unit, a vehicle controller, and an imaging device. The first imaging unit captures an image of the environment around a vehicle. The vehicle controller includes an area acquisition unit that acquires a blind spot area based on location information indicating a location of the vehicle. The blind spot area is an area where a blind spot is created inside an imaging area of the first imaging unit due to an object in the environment around the vehicle. The imaging device includes an information acquisition unit that acquires information about the blind spot area and a second imaging unit that captures an image of the environment around the vehicle. The vehicle controller further includes a receiving unit that receives an image of the blind spot area captured by the second imaging unit.

A vehicle according to an embodiment of the present disclosure includes a first imaging unit, an area acquisition unit, and a receiving unit. The first imaging unit captures an image of the surrounding environment. The area acquisition unit acquires a blind spot area based on location information indicating a current location. The blind spot area is an area where a blind spot of the first imaging unit is created due to an object in the surrounding environment. The receiving unit acquires, from an imaging device, an image of the blind spot area captured based on information about the blind spot area.

An imaging device according to an embodiment of the present disclosure includes an information acquisition unit, a second imaging unit, and a transmitting unit. The information acquisition unit acquires information about a blind spot area from a vehicle controller. The vehicle controller acquires the blind spot area based on location information indicating a location of a vehicle. The blind spot area is an area where an object in the environment around the vehicle creates a blind spot in an imaging area of a first imaging unit that captures an image of the environment around the vehicle. The second imaging unit captures an image of the environment around the vehicle. The transmitting unit that transmits an image of the blind spot area captured by the second imaging unit to the vehicle or the vehicle controller.

### BRIEF DESCRIPTION OF THE DRAWINGS

FIG. 1 is a diagram illustrating a schematic configuration of a driving support system according to a first embodiment.
FIG. 2 is a flowchart illustrating an example of a driving support processing procedure by the driving support system according to the first embodiment.
FIG. 3 is a flowchart for explaining an example of a method for estimating a blind spot area and an example of a method for calculating the flight location of a flying object according to the first embodiment.
FIG. 4 is a diagram for explaining an example of a method for estimating a blind spot area created by an object registered in map information.
FIG. 5 is a diagram for explaining an example of a method for estimating a blind spot area created by an object not registered in map information.
FIG. 6 is a diagram for explaining an example of a method for calculating a flight location based on a blind spot area.
FIG. 7 is a flowchart for explaining an example of a method for creating an image to be displayed on a display device in the first embodiment.
FIG. 8 is a diagram for explaining an example of an image in which an icon is superimposed onto an image captured by a vehicle camera 112.
FIG. 9 is a diagram illustrating a schematic configuration of a driving support system according to a second embodiment.
FIG. 10 is a flowchart of an example of a method for estimating a blind spot area and an example of a method for selecting roadside equipment according to the second embodiment.
FIG. 11 is a diagram illustrating a schematic configuration of a driving support system according to a third embodiment.
FIG. 12 is a flowchart for explaining an example of a method for estimating a blind spot area and an example of a method for selecting roadside equipment according to the third embodiment.

### DESCRIPTION OF EMBODIMENTS

Hereinafter, embodiments of a driving support system applying the present invention will be described with reference to the drawings, but the present disclosure is not limited to these embodiments. For the sake of convenience in illustration, the dimensional ratios in the drawings do not necessarily match what is described.

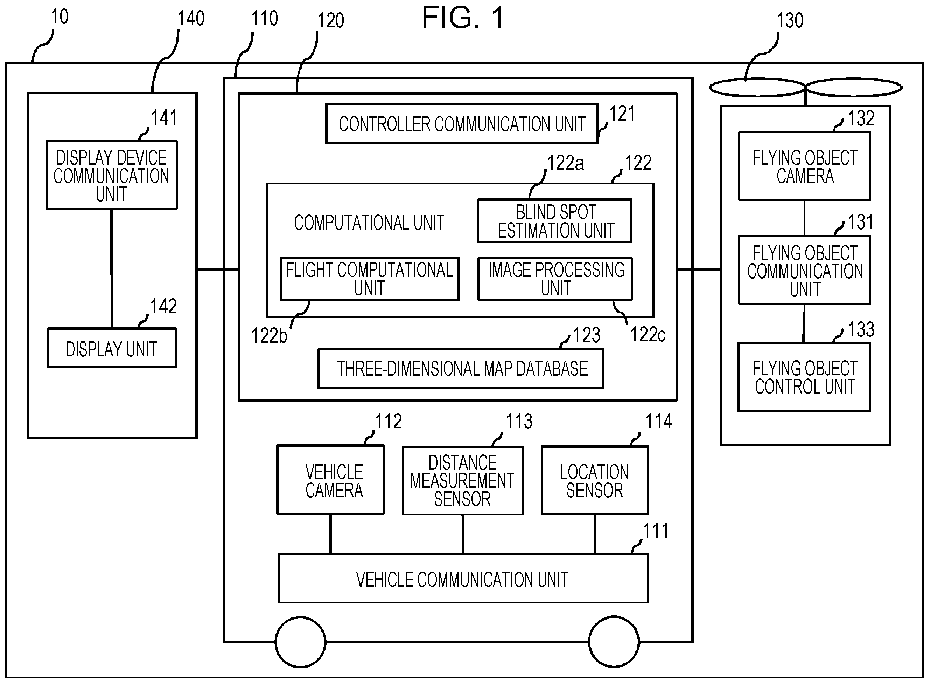

A first embodiment of a driving support system provided with the present invention will be described with reference to FIG. 1. A driving support system 10 according to the present embodiment includes a vehicle 110, a controller 120 which is a vehicle controller, a flying object 130, a display device 140, and the like. The driving support system 10 supports remote operation of the vehicle 110 by an operator at a driving support center in a remote location. The controller 120 may be mounted on the vehicle 110. The flying object 130 may be mounted on the vehicle 110 and configured to take off and land according to instructions from the controller 120. The display device 140 is installed in the driving support center and provides images of the vicinity of the vehicle 110 to the operator who remotely operates the vehicle 110. The flying object 130 and the display device 140 are each connected to the controller 120 to transmit and receive information through a communication cable, a wireless network, or the like. In the present embodiment, the vehicle 110 is assumed to communicate wirelessly with the flying object 130 and the display device 140.

In FIG. 1, the lines joining function blocks indicate the flow of control signals or communicated information. Communication between function blocks may be wired communication or wireless communication.

The vehicle 110 includes a vehicle communication unit 111, a vehicle camera 112 which is a first imaging unit, a distance measurement sensor 113 which is a distance measurement unit, a location sensor 114, and the like.

The vehicle 110 may include, for example, automobiles, industrial vehicles, railway cars, lifestyle vehicles, fixed-wing aircraft that travel on a runway, and the like. Automobiles may include, for example, passenger vehicles, trucks, buses, bicycles, trolley buses, and the like. Industrial vehicles may include, for example, industrial vehicles for agriculture and construction and the like. Industrial vehicles may include, for example, forklifts, golf carts, and the like. Industrial vehicles for agriculture may include, for example, tractors, cultivators, transplanters, binders, combines, lawn mowers, and the like. Industrial vehicles for construction may include, for example, bulldozers, scrapers, excavators, cranes, dump trucks, road rollers, and the like. Human-powered vehicles may also be included.

The vehicle communication unit 111 transmits an image captured by the vehicle camera 112 to a controller communication unit 121. The vehicle communication unit 111 transmits distance measurement information measured by the distance measurement sensor 113, location information measured by the location sensor 114, and the direction of travel of the vehicle 110 to the controller communication unit 121.

The vehicle camera 112 is installed on the interior or the exterior of the vehicle 110 and captures the environment around the vehicle 110 to obtain an image. In the present embodiment, the vehicle camera 112 is installed to capture an area ahead of the vehicle 110. The image obtained by the vehicle camera 112 may approximate the scenery visible from the driver's seat of the vehicle 110. The vehicle camera 112 may also be installed to capture an area behind or to the sides of the vehicle 110.

The distance measurement sensor 113 measures and outputs the distance from the vehicle 110 to a nearby object as distance measurement information. The distance measurement sensor 113 may include, for example, a laser radar, a millimeter-wave radar, an ultrasonic sensor, and the like. The measured distance measurement information is transmitted to the controller communication unit 121 by the vehicle communication unit 111.

The location sensor 114 measures the current location of the vehicle 110. The location sensor 114 may include a Global Positioning System (GPS), a magnetic compass, and the like. The GPS acquires an absolute location of the vehicle 110 as latitude and longitude in a ground coordinate system. The magnetic compass measures an absolute compass bearing of the vehicle 110 to obtain the direction of travel of the vehicle 110. The measured current location and direction of travel of the vehicle 110 are transmitted as location information to the controller communication unit 121 by the vehicle communication unit 111.

The controller 120 includes a controller communication unit 121 which is a receiving unit, a computational unit 122, a three-dimensional map database 123, and the like.

As described in further detail below, the computational unit 122 includes one or more processors to provide control and processing power for performing various functions. Depending on various embodiments, the one or more processors may be implemented as a single integrated circuit (IC) or as multiple, communicably connected ICs and/or discrete circuits. The one or more processors can be implemented according to any of various known technologies.

In one embodiment, the processor includes, for example, one or more circuits or units configured to perform one or more data computation procedures or processes by executing instructions stored in an associated memory. In another embodiment, the processor may be firmware (for example, discrete logic components) configured to execute one or more data computation procedures or processes. Depending on various embodiments, the processor may include one or more processors, controllers, microprocessors, microcontrollers, application-specific integrated circuits (ASICs), digital signal processors, programmable logic devices, field-programmable gate arrays, any combination of these devices or configurations, or a combination of other known devices and configurations, and may perform the functions described below.

The computational unit 122 controls the controller communication unit 121, the computational unit 122, the three-dimensional map database 123, and the like. The controller 120 may be installed in the vehicle 110 or in a location outside the vehicle 110. In the first embodiment, the controller 120 is mounted on the vehicle.

The controller communication unit 121 receives from the vehicle communication unit 111 the image captured by the vehicle camera 112, the distance measurement information measured by the distance measurement sensor 113, and the location information measured by the location sensor 114. The controller communication unit 121 transmits flight location information to a flying object communication unit 131. The flight location information is calculated based on a blind spot area estimated by the computational unit 122. The blind spot area is an area which is within the area observable by the vehicle camera 112 but which cannot be observed because the view is obstructed by an object. The controller communication unit 121 receives from the flying object communication unit 131 an image captured by a flying object camera 132. The controller communication unit 121 transmits image information to the display device communication unit 141.

The computational unit 122 includes software, that is, a blind spot estimation unit 122a, a flight computational unit 122b, and an image processing unit 122c. The computational unit 122 functions as an area acquisition unit together with the blind spot estimation unit 122a. Through the above software, the computational unit 122 performs estimation of a blind spot area, computation of the flight location of the flying object 130, and image processing on an image of the blind spot area. The blind spot estimation unit 122a, the flight computational unit 122b, and the image processing unit 122c may be stored in a storage device not illustrated.

The blind spot estimation unit 122a estimates, from the location information on the vehicle 110 measured by the location sensor 114 and map information obtained from the three-dimensional map database 123, an area where a blind spot occurs within the range of the visual field from the vehicle 110. The blind spot estimation unit 122a estimates, from distance information to an object near the vehicle 110 measured by the distance measurement sensor 113, the location information on the vehicle 110, and map information obtained from the three-dimensional map database 123, an area where a blind spot for the vehicle 110 occurs. The map information is three-dimensional map information on the environment around the vehicle 110. The map information is obtained from the three-dimensional map database 123 based on the location information on the vehicle 110. A method for estimating the blind spot area will be described later.

The flight computational unit 122b calculates the flight location of the flying object 130. The flight location is set to a location where the blind spot area estimated by the blind spot estimation unit 122a can be captured by the flying object camera 132. The flight location of the flying object 130 is outputted as flight location information. The flight location information may include coordinate information or the like. A method for calculating the flight location will be described later.

The image processing unit 122c performs image processing on the image captured by the flying object camera 132. Specifically, for example, the image processing unit 122c recognizes a prescribed object in the image to classify the type of the object. Types of prescribed objects may include, for example, buildings, vehicles, bicycles, and people. The image processing unit 122c may determine from the type of object whether the object is hazardous to the vehicle 110. The image processing unit 122c may determine the risk of an object from the speed and direction of movement of the object and the direction of travel of the vehicle 110. The image processing unit 122c acquires from the controller communication unit 121 an image captured by the vehicle camera 112 disposed in the vehicle 110. The image processing unit 122c superimposes an icon corresponding to the classified type of object and the risk of the object onto an image captured by the vehicle camera 112. The way of obtaining the position where the icon is to be superimposed will be described later. The image with the superimposed icon is transmitted to the display device communication unit 141 by the controller communication unit 121.

The three-dimensional map database 123 is a storage medium that stores and manages three-dimensional map information on the area in which the vehicle 110 travels. The three-dimensional map information includes information on roads and object information, that is, information on objects other than roads. Information on roads may include, for example, three-dimensional coordinates, shape, size, color, and type of roads, lanes, lane markings, signs, and the like. Object information may include three-dimensional coordinates, shape, size, color, and type of buildings, facilities, tunnels, and the like. Shape and size are expressed by three-dimensional coordinates of a plurality of endpoints forming an outline of an object, for example. A geographic information system (GIS) database may be used as the three-dimensional map database.

The flying object 130, which is an imaging device, includes a flying object communication unit 131 which is an information acquisition unit, a flying object camera 132 which is a second imaging unit, a flying object control unit 133, and the like. The flying object 130 may include an unmanned aircraft referred to as an unmanned aerial vehicle (UAV) or a drone. The flying object 130 is mounted on the vehicle 110 and may take off from the vehicle 110 and fly when the vehicle 110 is remotely operated from the driving support center, for example. While in flight, the flying object 130 may be capable of hovering in a prescribed location or cruising at high speed.

The flying object communication unit 131 receives from the controller communication unit 121 flight location information on the flying object 130. The flying object communication unit 131 transmits an image captured by the flying object camera 132 to the controller communication unit 121.

The flying object camera 132 is installed in the flying object 130 and captures the environment around the flying object 130 to obtain an image. The imaging direction of the flying object camera 132 may be changeable by a drive device. The flying object camera 132 may be installed to capture an area ahead, below, behind, or to the sides of the flying object 130. The first embodiment assumes that an area below the flying object 130 is captured when the flying object camera 132 captures the blind spot area.

The flying object control unit 133 controls a flight mechanism not illustrated to move the flying object 130 to a location indicated by the flight location information.

The display device 140 includes a display device communication unit 141, a display unit 142, and the like. The display device 140 is a device that displays an image created by the image processing unit 122c. The display device 140 may be disposed in the driving support center or some other location.

The display device communication unit 141 receives from the controller communication unit 121 the image created by the image processing unit 122c.

The display unit 142 displays the image received by the display device communication unit 141 on the display device 140. The displayed image is used when an operator at the driving support center remotely operates the vehicle 110.

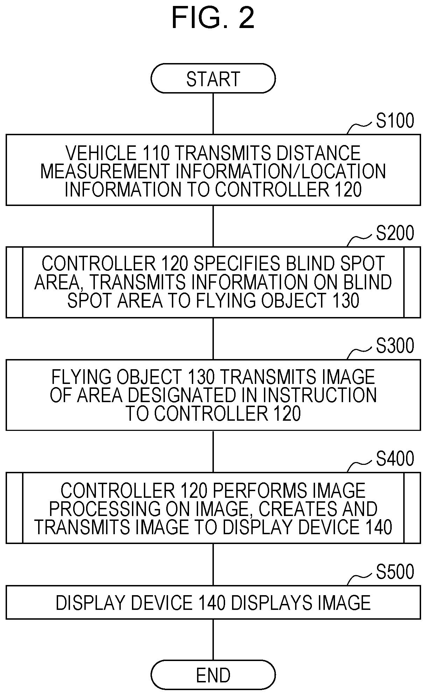

A driving support processing procedure in the driving support system 10 according to the first embodiment will be described with reference to FIG. 2.

First, the vehicle communication unit 111 transmits distance measurement information measured by the distance measurement sensor 113 and location information measured by the location sensor 114 to the controller communication unit 121 (step S100).

The controller 120, upon obtaining the distance measurement information and location information, uses the blind spot estimation unit 122a to estimate an area where a blind spot occurs. The flight computational unit 122b calculates as the flight location a location where the flying object camera 132 can capture the blind spot area estimated by the blind spot estimation unit 122a. The blind spot area is an area on a road which is in the area observable by the vehicle camera 112 but which cannot be observed because the view is obstructed by an object. The controller communication unit 121 transmits information on the flight location calculated by the flight computational unit 122b to the flying object communication unit 131 (step S200).

When the flying object 130 obtains the flight location information, the flying object control unit 133 controls the flight mechanism not illustrated to move the flying object 130. After being moved to an aerial location indicated by the flight location information, the flying object camera 132 captures an image of the blind spot area estimated by the blind spot estimation unit 122a. The captured image is transmitted to the controller communication unit 121 (step S300).

When the controller 120 obtains the image captured by the flying object camera 132, the image processing unit 122c performs image processing on an image captured by the vehicle camera 112. Specifically, the image processing unit 122c superimposes an icon onto the image captured by the vehicle camera 112 and obtained from the vehicle communication unit 111. The icon may depend on the type of an object classified by the image processing unit 122c in the image captured by the flying object camera 132. The controller communication unit 121 transmits the image with the superimposed icon to the display device communication unit 141 (step S400).

The display device 140 causes the display unit 142 to display the obtained image (step S500). The image is used by an operator at the driving support center to remotely operate the vehicle 110. By superimposing the icon onto the image, the operator at the driving support center in a remote location can identify an object that exists in the blind spot area. The type and display state of the icon may depend on the risk of the object recognized by the image processing unit 122c. The operator can judge whether the object is hazardous from the type and display state of the icon.

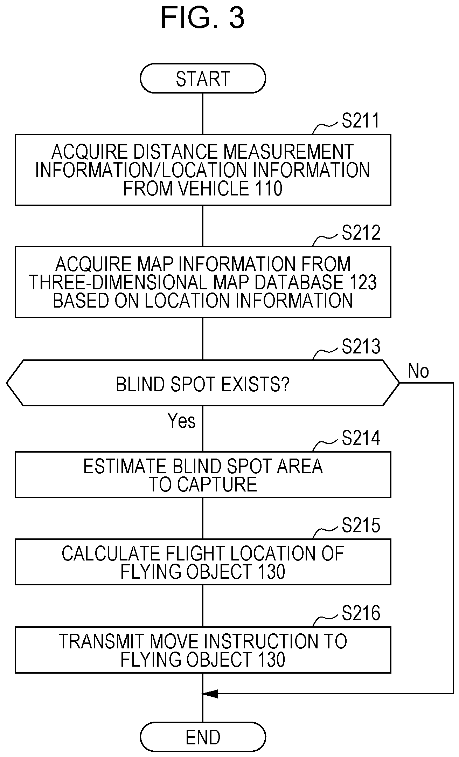

A method for estimating the blind spot area and a method for calculating the flight location of the flying object according to the present embodiment will be described with reference to FIG. 3.

First, the controller communication unit 121 obtains distance measurement information measured by the distance measurement sensor 113 and location information measured by the location sensor 114 (step S211). The distance measurement information may include, among other things, information on the distance from the vehicle 110 to a nearby object. The location information may include, among other things, information on the current location of the vehicle 110.

The computational unit 122 obtains map information from the three-dimensional map database 123 based on the location information obtained in step S211 (step S212). The map information is three-dimensional map information on the environment around the vehicle 110.

The computational unit 122 determines, from the distance measurement location, the location information, and the map information, whether a blind spot where the view is obstructed by an object exists within the area observable from the vehicle 110 (step S213). Objects may include objects registered in the map information and objects not registered in the map information. Objects registered in the map information may include, for example, buildings, signs, facilities, tunnels, mountains, and the like. Objects not registered in the map information may include, for example, stopped heavy vehicles, pedestrians, newly constructed buildings not registered in the map information, other obstacles present on the road, and the like.

If a blind spot is determined not to exist in step S213, the process is ended. If a blind spot is determined to exist in step S213, the blind spot estimation unit 122a estimates a blind spot area to be captured by the flying object 130 (step S214). A method for estimating the blind spot area will be described later.

The flight computational unit 122b calculates the flight location of the flying object 130 (step S215). The flight location is set to a location where the blind spot area estimated in step S214 can be captured by the flying object camera 132. A method for calculating the flight location will be described later.

The controller communication unit 121 transmits the flight location calculated in step S215 to the flying object communication unit 131 (step S216) and ends the process.

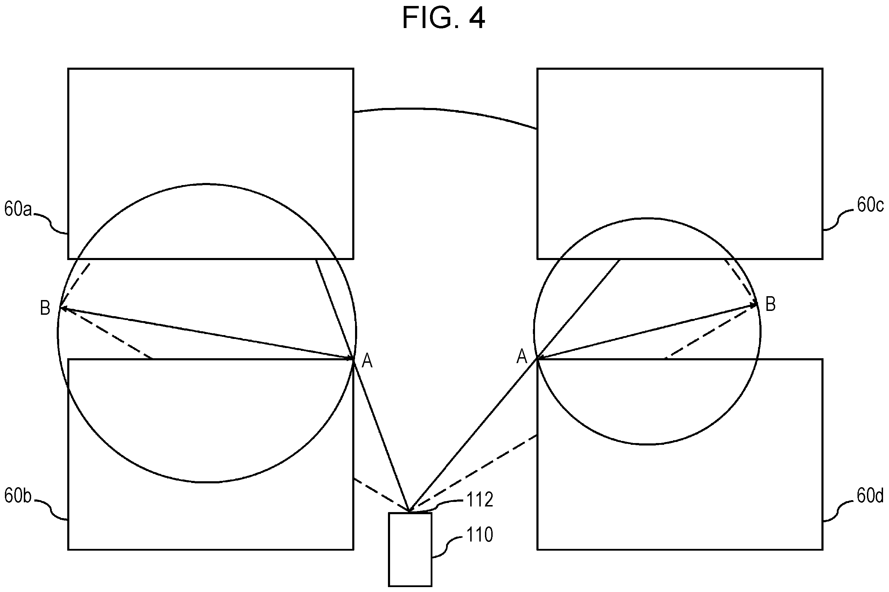

A method executed in step S214 for estimating the blind spot area created by an object registered in the map information will be described with reference to FIG. 4.

In the example illustrated in FIG. 4, objects 60a, 60b, 60c, 60d registered in the map information exist on the road. The objects 60a, 60b, 60c, 60d may be buildings built facing the road, for example. The vehicle 110 observes an intersection formed by the objects 60a, 60b, 60c, 60d from the road that the objects 60b and 60d face.

The blind spot estimation unit 122a determines, from the location information and the map information, whether a blind spot area where a blind spot is created exists. Specifically, the range of the visual field from the vehicle 110 (as an example, the range of the visual field from the vehicle camera 112; hereinafter referred to as the imaging area) and the locations of the objects registered in the map information are overlaid. An area ahead of the vehicle 110 that cannot be seen because of the presence of an object (that is, an area where the visual field is obstructed) is determined to be a blind spot area.

The imaging area is defined in a fan shape having a radius R (the visual distance of the vehicle camera 112) and a central angle θ (the angle of view of the vehicle camera 112).

If an object exists in the imaging area, a blind spot area is created due to the visual field of the vehicle camera being obstructed by the object.

If an object creating a blind spot does not exist in a prescribed distance range, the imaging area coincides with the prescribed distance range. In FIG. 4, a blind spot area is indicated by a dashed line, a portion of the outline of an object, and the direction of the line of sight from the vehicle-mounted camera 112.

In the example illustrated in FIG. 4, two blind spot areas are determined to exist within the imaging area due to the object 60b and the object 60d.

The blind spot estimation unit 122a obtains from the imaging area and the map information a point A (first location) that is the point closest to the vehicle 110 within the area on the road where a blind spot occurs. The point A is the point closest to the vehicle 110 on the outline of an object adjacent to the blind spot area.

The blind spot estimation unit 122a obtains a point B (second location) that is the point farthest away from the point A within the blind spot area to which the point A belongs.

The blind spot area is contained in the range of a circle of which the diameter is the points A and B within the same blind spot area.

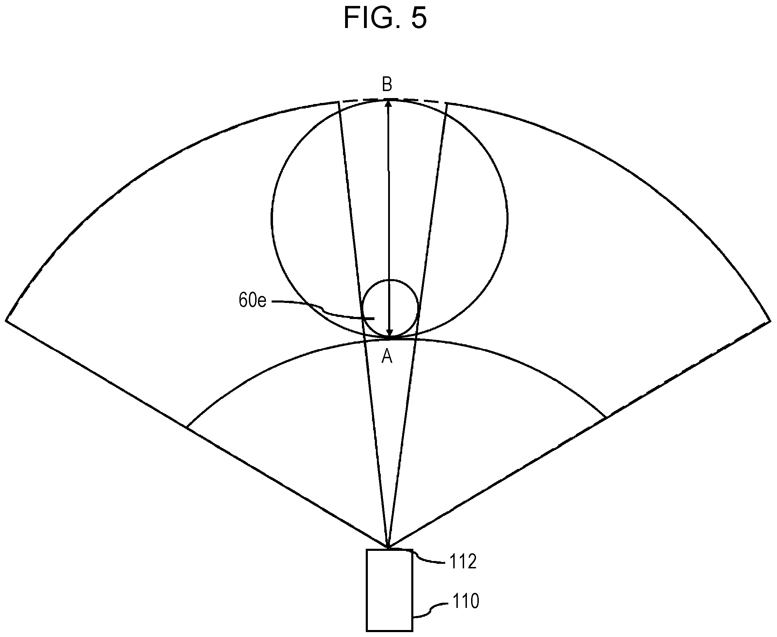

A method executed in step S214 for estimating the blind spot area created by an object not registered in the map information will be described using FIG. 5.

In the example illustrated in FIG. 5, an object 60e not registered in the map information exists on the road. The blind spot estimation unit 122a determines, from the distance measurement information, the location information, and the map information, whether a blind spot area where is a blind spot is created exists.

For example, the distance from the vehicle 110 to an object registered in the map information is compared to the distance to an object measured by the distance measurement sensor. If an object with a non-matching distance exists, an object not registered in the map information is determined to exist.

The blind spot estimation unit 122a determines as a blind spot area an area where the visual field from the vehicle 110 is obstructed by an object not registered in the map information.

In the example illustrated in FIG. 5, a blind spot area exists within the imaging area due to the object 60e. The imaging area, or in other words the prescribed distance range, is defined in a fan shape having a radius R (the visual distance of the vehicle camera 112) and a central angle θ (the angle of view of the vehicle camera 112) as described above. In FIG. 5, a blind spot area is indicated by a dashed line, a portion of the outline of an object, and the direction of the line of sight from the vehicle-mounted camera 112.

The blind spot estimation unit 122a obtains from the imaging area and the map information a point A that is the point closest to the vehicle 110 within the area where a blind spot occurs. Since an object not registered in the map information is of unknown size and shape, the point closest to the vehicle 110 within the area where the object exists is the point A.

The distance r from the vehicle 110 to the object 60e is measured by the distance measurement sensor 113.

The blind spot estimation unit 122a obtains a point B that is the point farthest away from the point A within the blind spot area to which the point A belongs. The blind spot area is contained in the range of a circle of which the diameter is the line segment joining the points A and B within the area of the same blind spot.

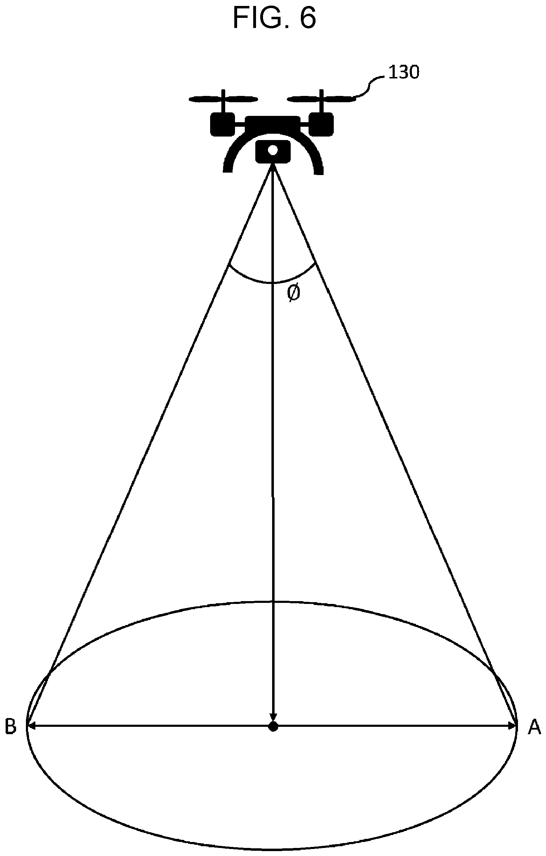

A method for calculating the flight location based on the blind spot area estimated by the blind spot estimation unit 122a in step S215 will be described using FIG. 6.

In the example illustrated in FIG. 6, as described in FIGs. 4 and 5, a blind spot area exists within a circle of which the diameter is the line segment joining the points A and B. Consequently, the flight location is a location where the flying object 130 can capture this circle from the flying object camera 130 mounted thereon.

In the present example, the flying object camera 132 is assumed to point straight down from the flying object 130 when capturing a blind spot area. Consequently, the flight location can be calculated based on the angle of view ϕ of the flying object camera 132 mounted on the flying object 130 and the distance from the point A to the point B.

Specifically, the visual range of the flying object 130 can be defined in a cone of which the apex angle is the angle of view ϕ of the flying object camera 132. Consequently, the flight location can be obtained as the location of the apex of a cone of which the base is a circle of diameter from the point A to the point B and the apex angle is the angle of view ϕ. That is, the altitude of the flight location corresponds to the height of the cone. Note that the flight location of the flying object 130 may be any location from which the flying object camera 132 can capture the area of a circle of which the diameter is the line segment joining the points A and B, and is not limited to the example in the present embodiment.

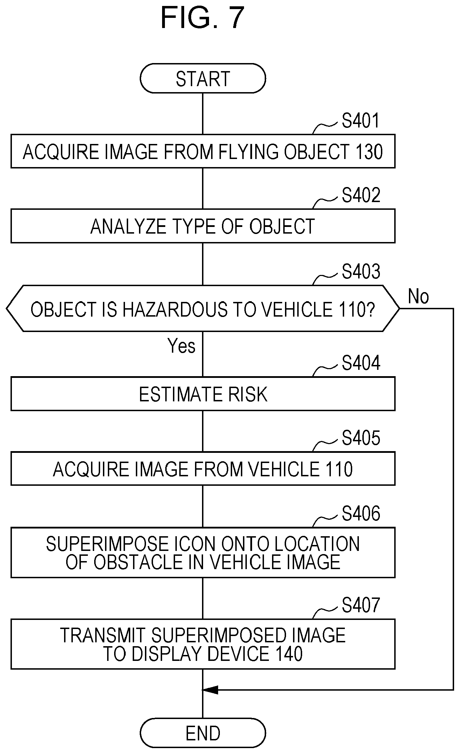

A method for creating an image to be displayed by the display device of the driving support system 10 according to the first embodiment will be described using FIG. 7.

First, the controller communication unit 121 acquires an image captured by the flying object camera 132 (step S401).

The image processing unit 122c recognizes an object in the image acquired in step S401 to classify the type of the object (step S402). Types of objects may include, for example, buildings, vehicles, bicycles, people, and the like.

The image processing unit 122c determines, from the location of the object classified in step S402, whether the object is hazardous to the vehicle 110 (step S403). A hazardous object is, for example, an object for which there is a possibility of a collision with the vehicle 110, and may be, for example, a vehicle, a bicycle, a person, or the like.

If the recognized object is determined not to be a hazardous object to the vehicle 110 in step S403, the process is ended. If the object is determined to be a hazardous object to the vehicle 110 in step S403, the image processing unit 122c estimates the risk of the object from the speed and direction of movement of the object and the direction of travel of the vehicle 110 (step S404). The risk may be divided into multiple levels.

The controller communication unit 121 acquires an image captured by the vehicle camera 112 (step S405).

The image processing unit 122c calculates which location in the image captured by the vehicle camera 112 corresponds to the location of the object for which the risk was obtained in step S404. The image processing unit 122c superimposes an icon according to the type classified in step S402 onto the location where the object that is hazardous to the vehicle 110 exists in the image acquired in step S405 (step S406). The display state of the icon may be changed depending on the risk of the object. Changes of display state may be, for example, changes of color, transmittance, saturation, brightness, size, or the like and changes of a dynamic display method such as blinking or moving.

The controller communication unit 121 transmits the image with the superimposed icon created in step S406 to the display device communication unit 141 (step S407).

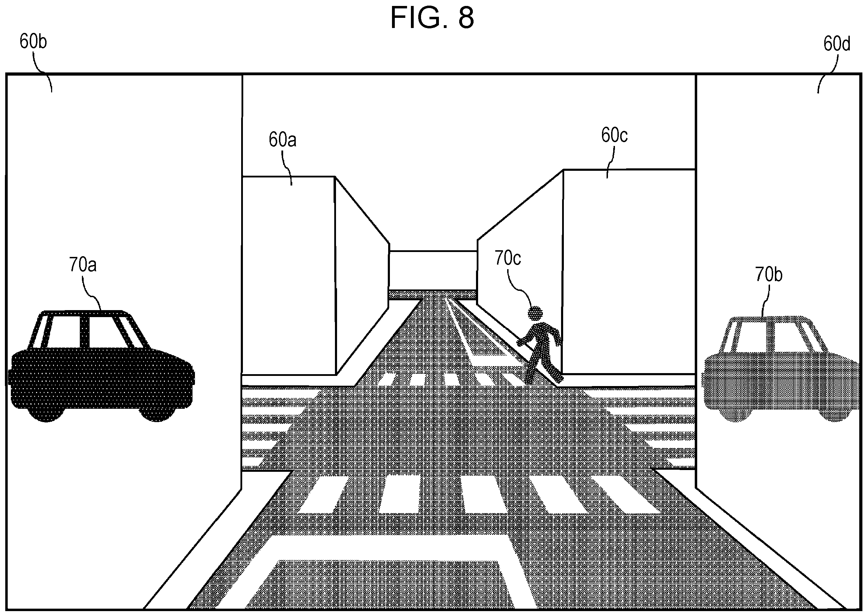

FIG. 8 is a diagram illustrating an image in which an icon is superimposed onto an image captured by the vehicle camera 112.

For example, as illustrated in FIG. 8, the image processing unit 122c generates an image in which icons 70a, 70b, 70c corresponding to types of objects recognized by the image processing unit 122c are superimposed onto an image captured by the vehicle camera 112.

In FIG. 8, the objects 60a, 60b, 60c, 60d are buildings registered in the map information obtained from the three-dimensional map database 123. The icons 70a, 70b correspond to objects determined to be hazardous from among the objects that exist at locations on the road where the visual field is obstructed by the buildings, namely the objects 60b, 60d. The display positions of the icons 70a, 70b correspond to the locations of the objects in the image captured by the flying object camera 132.

The image processing unit 122c may change the display state of the icons 70a, 70b, 70c depending on the risk. Changes of display state may be, for example, changes of color, transmittance, saturation, brightness, size, or the like and changes of a dynamic display method such as blinking or moving. The image processing unit 122c may also display the icons 70a, 70b, 70c in different colors depending on the risk.

In FIG. 8, for example, the icon 70a, which is a short distance away from the vehicle 110 and which has a high risk of approaching the vehicle 110, may be displayed with a red color. The icon 70c, which is farther away from the vehicle 110 than the icon 70a but which has a high risk of approaching the vehicle 110, may be displayed with a yellow color. The icon 70b, which is a short distance away from the vehicle 110 but which has a low risk of approaching the vehicle 110, may be displayed with a blue color.

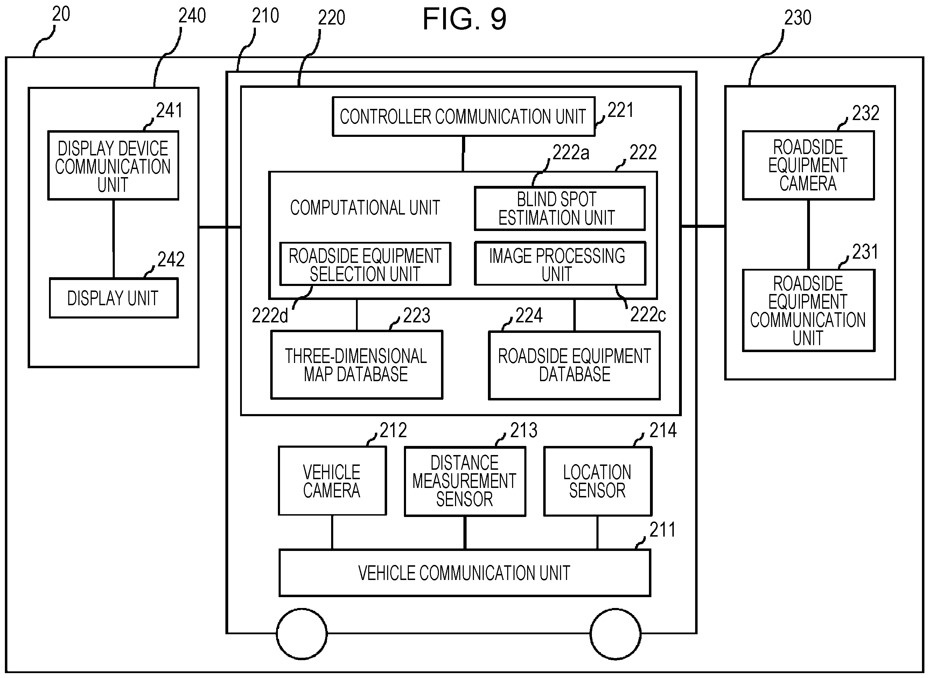

A second embodiment of the present invention will be described with reference to FIG. 9.

A driving support system 20 according to the present embodiment includes a vehicle 210, a controller 220, roadside equipment 230, a display device 240, and the like. The driving support system 20 differs from the driving support system 10 according to the first embodiment by being provided with a roadside equipment database 224 and roadside equipment 230 which is an imaging device.

In the second embodiment, the vehicle 210 and the display device 240 are similar in configuration and function to the vehicle 110 and the display device 140 according to the first embodiment, and therefore a description is omitted.

Hereinafter, unless explicitly noted otherwise, a component referred to by the same name as a component according to the first embodiment is assumed to have the same configuration and function, and a description thereof is omitted.

The roadside equipment 230 is each connected to the controller 220 to transmit and receive information through a communication cable, a wireless network, or the like. The controller 220 includes a controller communication unit 221, a computational unit 222, a three-dimensional map database 223, a roadside equipment database 224, and the like.

The controller 220 controls the controller communication unit 221, the computational unit 222, the three-dimensional map database 223, the roadside equipment database 224, and the like.

The controller communication unit 221 transmits an imaging instruction to the roadside equipment 230 that can capture a blind spot area. The controller communication unit 221 receives an image captured by the roadside equipment camera 232 from a roadside equipment communication unit 231.

The computational unit 222 includes software, that is, a blind spot estimation unit 222a, a roadside equipment selection unit 222d, an image processing unit 222c, and the like.

The roadside equipment selection unit 222d selects the roadside equipment 230 to capture a blind spot area. The roadside equipment selection unit 222d may be stored in a storage device not illustrated.

The roadside equipment selection unit 222d acquires, from the roadside equipment database 224, information on the roadside equipment 230 that can capture a blind spot area.

The image processing unit 222c performs image processing on the image captured by the roadside equipment camera 232. The image processing unit 222c is similar in configuration and function to the image processing unit 122c according to the first embodiment, and therefore a description is omitted.

The roadside equipment database 224 is a storage medium that stores and manages roadside equipment information, that is, information about roadside equipment installed in the area in which the vehicle 210 travels. The roadside equipment information may include, among other things, coordinate information on the location where the roadside equipment is installed and information on an area that the roadside equipment can capture.

The roadside equipment 230 includes a roadside equipment communication unit 231 which is an information acquisition unit, a roadside equipment camera 232 which is a second imaging unit, and the like.

The roadside equipment 230 is a device which is positioned within vehicle-to-infrastructure (V2I) and which controls coordination between human and vehicle through the collection and distribution of signal information and surrounding information at an intersection.

The roadside equipment 230 may transmit and receive information over a communication network or the like, to and from a vehicle equipped with a system that can communicate with the roadside equipment 230. The signal information may include, among other things, coordinate information on the location of a traffic signal installed at an intersection and information on the color being displayed by the traffic signal. The surrounding information may include information about the environment around the roadside equipment.

The roadside equipment communication unit 231 receives an imaging instruction from the controller communication unit 221. The roadside equipment communication unit 231 transmits an image captured by the roadside equipment camera 232 to the controller communication unit 221.

The roadside equipment camera 232 is installed in the roadside equipment 230 and captures the environment around the roadside equipment 230 to obtain an image. In the second embodiment, the roadside equipment camera 232 is installed to capture a prescribed area on the road.

The second embodiment differs from the driving support system 10 according to the first embodiment in that the roadside equipment camera 232 captures a blind spot area. Only the portions of the processing procedure for driving assistance in the driving support system 20 that differ from the processing procedure for driving assistance in the driving support system 10 according to the first embodiment will be described.

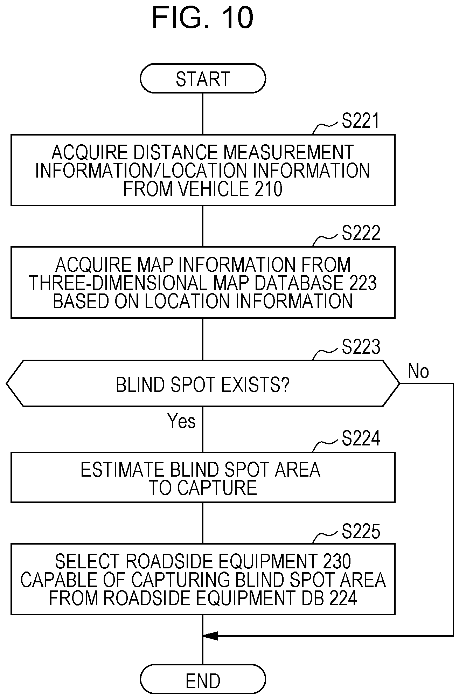

A method for calculating a blind spot area and a method for selecting roadside equipment in the driving support system 20 according to the second embodiment will be described with reference to FIG. 10.

In the second embodiment, the process from steps S221 to S223 is the same as the process from steps S211 to S213, and therefore a description is omitted.

If a blind spot is determined to exist in step S223, the blind spot estimation unit 222a estimates a blind spot area to be captured by the roadside equipment 230 (step S224).

The roadside equipment selection unit 222d selects, from the roadside equipment database 224, the roadside equipment 230 that can capture the blind spot area estimated in step S224 (step S225). The roadside equipment database 224 stores roadside equipment information including, among other things, coordinate information on the location where the roadside equipment is installed and information on an area that the roadside equipment can capture. The roadside equipment selection unit 222d selects, from the blind spot area estimated in step S224 and the roadside equipment information, the roadside equipment 230 that can capture the blind spot area, and ends the process.

The second embodiment differs from the driving support system 10 according to the first embodiment in that an image is acquired by the roadside equipment camera 232, but the image processing by the image processing unit 222c on the image captured by the roadside equipment camera 232 and the method for creating an image to be displayed on the display device 240 are similar to the driving support system 10 according to the first embodiment, and therefore a description is omitted.

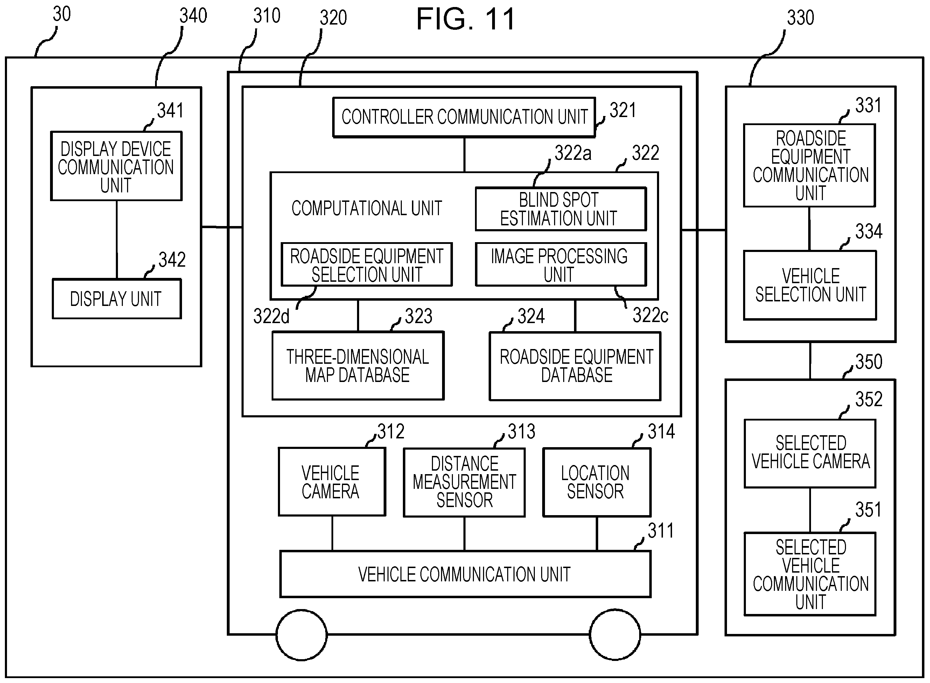

A third embodiment of the present invention will be described with reference to FIG. 11. A driving support system 30 according to the present embodiment includes a vehicle 310, a controller 320, roadside equipment 330, a display device 340, a selected vehicle 350 which is an imaging device, and the like. The roadside equipment 330 and the selected vehicle 350 are each connected to the controller 320 to transmit and receive information through a communication cable, a wireless network, or the like. The driving support system 30 differs from the driving support system 10 according to the first embodiment by being provided with a roadside equipment database 324, the roadside equipment 330, and the selected vehicle 350.

In the third embodiment, the vehicle 310 is similar in configuration and function to the vehicle 110 according to the first embodiment, and therefore a description is omitted. The display device 340 and the display device 340 are similar in configuration and function to the display device 140 and the display device 140 according to the first embodiment, and therefore a description is omitted.

Hereinafter, unless explicitly noted otherwise, a component referred to by the same name as a component according to the first embodiment is assumed to have the same configuration and function, and a description thereof is omitted.

The controller 320 includes a controller communication unit 321, a computational unit 322, a three-dimensional map database 323, a roadside equipment database 324, and the like.

The controller 320 controls the controller communication unit 321, the computational unit 322, the three-dimensional map database 323, the roadside equipment database 324, and the like.

The controller communication unit 321 selects the roadside equipment 330 located near a blind spot area. The controller communication unit 321 transmits an instruction causing the selected roadside equipment 330 to select a selected vehicle 350 that can capture the blind spot area. The controller communication unit 321 transmits to the roadside equipment 330 an instruction for capturing the vehicle environment with a selected vehicle camera 352. The controller communication unit 321 receives an image captured by the selected vehicle camera 352 from a selected vehicle communication unit 351 through a roadside equipment communication unit 331.

The computational unit 322 includes software, that is, a blind spot estimation unit 322a, a roadside equipment selection unit 322d, an image processing unit 322c, and the like. The roadside equipment selection unit 322d selects the roadside equipment 330 near the blind spot area.

The roadside equipment selection unit 322d acquires, from the roadside equipment database 324, the roadside equipment 330 near the blind spot area.

The image processing unit 322c performs image processing on an image captured by the selected vehicle camera 352. The image processing unit 322c is similar in configuration and function to the image processing unit 122c according to the first embodiment, and therefore a description is omitted.

The roadside equipment database 324 is a storage medium that stores and manages roadside equipment information, that is, information about roadside equipment installed in the area in which the vehicle 310 travels. The roadside equipment information may include, among other things, coordinate information on the location where the roadside equipment is installed.

The roadside equipment 330 includes a roadside equipment communication unit 331, a vehicle selection unit 334, and the like.

The roadside equipment communication unit 331 receives from the controller communication unit 321 an instruction to select the selected vehicle 350. The roadside equipment communication unit 331 transmits an imaging instruction to the selected vehicle communication unit 351. The roadside equipment communication unit 331 receives from the selected vehicle communication unit 351 an image captured by the selected vehicle camera 352. The roadside equipment communication unit 331 transmits the image captured by the selected vehicle camera 352 to the controller communication unit 321.

The vehicle selection unit 334 selects the selected vehicle 350 that can capture a blind spot area. The roadside equipment 330 communicates with vehicle located at points where communication with the roadside equipment 330 is available, and selects the selected vehicle 350 equipped with a camera that can capture the blind spot area.

The selected vehicle 350 includes a selected vehicle communication unit 351 which is an information acquisition unit, a selected vehicle camera 352 which is a second imaging unit, and the like. The selected vehicle 350 may be a vehicle with the same configuration as the vehicle 310 according to the present embodiment.

The selected vehicle communication unit 351 receives an imaging instruction from the roadside equipment communication unit 331. The selected vehicle communication unit 351 transmits an image captured by the selected vehicle camera 352 to the roadside equipment communication unit 331.

The selected vehicle camera 352 is installed on the interior or the exterior of the selected vehicle 350 and captures the environment around the selected vehicle 350 to obtain an image. In the present embodiment, the selected vehicle camera 352 is installed to capture an area ahead of the selected vehicle 350. The selected vehicle camera 352 may also be installed to capture an area behind or to the sides of the selected vehicle 350.

The third embodiment differs from the driving support system 10 according to the first embodiment in that the selected vehicle camera 352 captures a blind spot area. Only the portions of the processing procedure for driving assistance in the driving support system 30 that differ from the processing procedure for driving assistance in the driving support system 10 according to the first embodiment will be described.

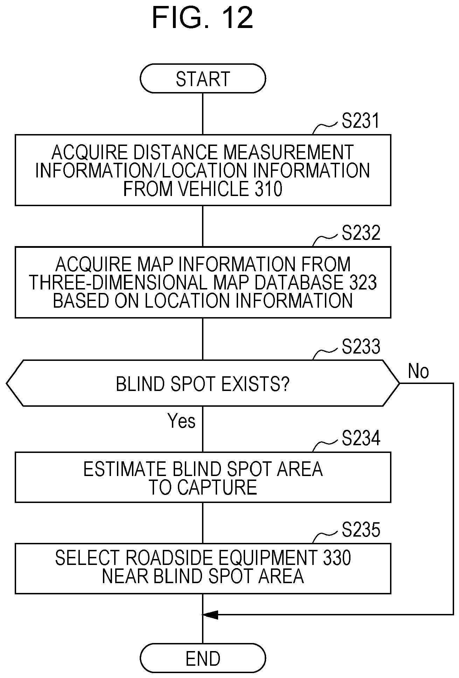

A method for calculating a blind spot area and a method for selecting the selected vehicle in the driving support system 30 according to the third embodiment will be described with reference to FIG. 12.

In the third embodiment, the process from steps S231 to S233 is the same as the process from steps S211 to S213, and therefore a description is omitted.

If a blind spot is determined not to exist in step S233, the process is ended. If a blind spot is determined to exist in step S233, the blind spot estimation unit 322a estimates a blind spot area to be captured (step S234).

The roadside equipment selection unit 322d selects, from the roadside equipment database 324, the roadside equipment 330 near the blind spot area estimated in step S234 and ends the process (step S235). The roadside equipment selection unit 322d selects, from the roadside equipment database 324 based on the blind spot area estimated in step S234, the roadside equipment 330 installed near the blind spot area.

Operations by the selected roadside equipment 330 will be described. The roadside equipment communication unit 331 communicates with vehicles that can communicate with the roadside equipment 330. The vehicle selection unit 334 transmits information about the blind spot area to the vehicles that can communicate with the roadside equipment 330.

A vehicle that has received the information about the blind spot area transmits to the roadside equipment 330 information about whether the blind spot area can be captured by a listed camera.

The roadside equipment 330 selects as the selected vehicle 350 a vehicle that can capture the blind spot area with a camera thereon.

The roadside equipment communication unit 331 transmits an imaging instruction to the selected vehicle communication unit 351.

Operations by the selected vehicle 350 will be described. The selected vehicle communication unit 351 receives an imaging instruction from the roadside equipment 330 and captures the blind spot area with the selected vehicle camera 352. The captured image is transmitted to the controller communication unit 321 via the roadside equipment 330.

The third embodiment differs from the driving support system 10 according to the first embodiment in that an image is acquired by the selected vehicle camera 352.

The method by which the image processing unit 322c processes the image captured by the selected vehicle camera 352 and the method of creating an image to be displayed on the display device 340 are similar to the driving support system 10 according to the first embodiment, and therefore a description is omitted.

As above, a driving support system according to the present disclosure can, with the above configuration, estimate an area where a blind spot occurs and provide information on the vehicle environment, including information on the area where the blind spot occurs, to the operator/driver of the vehicle.

The present disclosure has been described based on the drawings and examples, but note that a person skilled in the art could easily make various modifications and revisions based on the present disclosure. Consequently, it should be understood that these modifications and revisions are included in the scope of the present disclosure. For example, the functions and the like included in each component, each step, and the like may be rearranged in logically non-contradictory ways. A plurality of components, steps, or the like may be combined into one, or a single component, step, or the like may be subdivided. Embodiments of the present disclosure have been described mainly in terms of a device, but an embodiment of the present disclosure may also be implemented as a method including steps to be executed by each component of a device. An embodiment of the present disclosure may also be implemented as a method or program to be executed by a processor provided in a device, or as a storage medium on which the program is recorded. It should be understood that these embodiments are also included in the scope of the present disclosure.

For example, the display device 140 is not limited to being installed in the driving support center in a remote location. The vehicle 110 is not necessarily operated remotely, and the display device 140 may also be mounted in the vehicle 110 to support driving by the driver.

In the present disclosure, qualifiers such as "first" and "second" are identifiers for distinguishing configurations. The numerals denoting the configurations distinguished by qualifiers such as "first" and "second" in the present disclosure can be interchanged. For example, the first imaging unit can interchange the identifiers "first" and "second" with the second imaging unit. The identifiers are interchanged at the same time. The configurations are still distinguished after the interchange of the identifiers. The identifiers may be removed. The configurations with the identifiers removed therefrom are distinguished by signs. The description of identifiers such as "first" and "second" in the present disclosure shall not be used as a basis for interpreting the order of the configurations or the existence of identifiers with smaller numbers.

### REFERENCE SIGNS

10, 20, 30 driving support system
60a, 60b, 60c, 60d, 60e object
70a, 70b, 70c icon
110, 210, 310 vehicle
111, 211, 311 vehicle communication unit
112, 212, 312 vehicle camera
113, 213, 313 distance measurement sensor
114, 214, 314 location sensor
120, 220, 320 controller
121, 221, 321 controller communication unit
122, 222, 322 computational unit
122a, 222a, 322a blind spot estimation unit
122b flight computational unit
122c, 222c, 322c image processing unit
123, 223, 323 three-dimensional map database
130 flying object
131 flying object communication unit
132 flying object camera
133 flying object control unit
140, 240, 340 display device
141, 241, 341 display device communication unit
142, 242, 342 display unit
222d, 322d roadside equipment selection unit
224, 324 roadside equipment database
230, 330 roadside equipment
231, 331 roadside equipment communication unit
232 roadside equipment camera
334 vehicle selection unit
350 selected vehicle
351 selected vehicle communication unit
352 selected vehicle camera

## Claims

1. A driving support system comprising:
a first imaging unit that captures an image of an environment around a vehicle;
a vehicle controller including an area acquisition unit that acquires a blind spot area based on location information indicating a location of the vehicle, the blind spot area being an area where a blind spot is created inside an imaging area of the first imaging unit due to an object in the environment around the vehicle; and
an imaging device including an information acquisition unit that acquires information about the blind spot area and a second imaging unit that captures an image of the environment around the vehicle,
wherein the vehicle controller further includes a receiving unit that receives an image of the blind spot area captured by the second imaging unit.

2. The driving support system according to claim 1, wherein
the area acquisition unit acquires the blind spot area based on the location information and map information including object information that indicates a location of an object in the environment around the vehicle.

3. The driving support system according to claim 1 or 2, wherein
the area acquisition unit acquires the blind spot area based on the location information and a distance, measured by a distance measurement unit, from the vehicle to an obj ect.

4. The driving support system according to any of claims 1 to 3, wherein
a prescribed distance range from the first imaging unit is defined as the imaging area of the first imaging unit and
the imaging device captures an area defined by a circle of which the diameter is a line segment joining first and second positions in the blind spot area, the first position being the position closest to the vehicle and the second position being the position farthest away from the first position.

5. The driving support system according to claim 4, wherein
the imaging device moves to a position where the blind spot area can be captured.

6. The driving support system according to claim 5, wherein
the imaging device is a flying object and
the flying object changes altitude based on a size of the blind spot area and an angle of view of the second imaging unit.

7. A vehicle comprising:
a first imaging unit that captures an image of a surrounding environment;
an area acquisition unit that acquires a blind spot area based on location information indicating a current location, the blind spot area being an area where a blind spot of the first imaging unit is created due to an object in the surrounding environment; and
a receiving unit that acquires, from an imaging device, an image of the blind spot area captured based on information about the blind spot area.

8. An imaging device comprising:
an information acquisition unit that acquires information about a blind spot area from a vehicle controller that acquires the blind spot area based on location information indicating a location of a vehicle, the blind spot area being an area where an object in an environment around the vehicle creates a blind spot in an imaging area of a first imaging unit that captures an image of the environment around the vehicle;
a second imaging unit that captures an image of the environment around the vehicle; and
a transmitting unit that transmits an image of the blind spot area captured by the second imaging unit to the vehicle or the vehicle controller.
